# EUROPEAN PATENT APPLICATION

(11) **EP 4 194 421 A1**
(43) Date of publication of application: **14.06.2023**
(21) Application number: 21882894.5
(22) Date of filing: 21.10.2021
(51) Int. Cl.: C04B 24/18, C04B 24/06, C04B 24/26, C04B 28/02, C04B 28/08

(54) **CONCRETE ADMIXTURE**

(30) Priority: 23.10.2020 JP 2020178200
(71) Applicant: Construction Research & Technology GmbH, 83308 Trostberg (DE); Kameshima, Kenta, Chigasaki-shi, Kanagawa, 253-0071 (JP)
(72) Inventor: SAKUE Jiro, Chigasaki-shi, Kanagawa 253-0071 (JP); KOIZUMI Shinichi, Chigasaki-shi, Kanagawa 253-0071 (JP); KAMESHIMA Kenta, Chigasaki-shi, Kanagawa 253-0071 (JP)
(74) Representative: Lorenz, Klaus Uwe
(86) International application number: PCT/JP2021/038902
(87) International publication number: WO 2022/085754

(57) **Abstract**

The present invention provides an admixture for concrete with an excellent flow retainability over a longtime of 120 minutes until the placement of the concrete without loss of strength, and in which a workable time and constructability are obtainable because a suitable setting time is obtained, and in which bleeding is suppressible.

The admixture for concrete comprises a lignin derivative (A), a copolymer having a hydrolysable group (B) and a (meth)acrylic-based viscosity adjusting component (C), wherein the copolymer having the hydrolysable group (B) is a copolymer of at least two monomers consisting of an ethylenically unsaturated monomer having hydrolysability (b1) and an ethylenically unsaturated monomer having a polyalkyleneoxide ether chain (b2).

## Description

### [Technical Field]

The present invention relates to an admixture for concrete which adjusts the flow retainability (flowability) of concrete; and relates, for example, to an admixture for concrete used in a lean concrete mix with a high water-cement ratio.

### [Background Art]

Construction materials such concrete are generally utilized when constructing civil engineering structures such as tunnels, bridges and roads, or when constructing buildings. Concrete which is utilized as construction materials during construction is required to have suitable flowability, flow retainability and workable time (constructability), and is also required to have sufficient strength in the resultant structures and buildings. Accordingly, it is necessary for the concrete to be prepared by suitably mixing hydraulic binders such as cement, aggregates, water, admixtures, etc. Moreover, the concrete must be transported to a construction site in a state in which quality is maintained, and must be kept in a state in which quality is maintained.

Thus, a concrete having suitable flowability with little flowability change over time has been developed (Patent Literature 1). However, because the concrete of Patent Literature 1 requires a large amount of a hydraulic binder such as cement, chemical admixture and thickener component for the concrete to be mixed, there were problems such as: costs becoming high; handing becoming difficult because the viscosity of concrete became high; and the necessity of adding the thickener by manual labor or introducing a separately attached apparatus. Thus, the concrete of Patent Literature 1 could not be used in concrete with a high water-cement ratio which is often featured on the market.

Patent Literature 2 discloses a technique where, by utilizing an AE water-reducing agent in which a fixed amount of a thickening component was mixed into a concrete with a comparatively high water-cement ratio and containing 70% by mass or more of admix materials, a suitable flow retainability can be imparted without decreasing the unit water content or amount of admixture used, merely by adding an AE water-reducing agent by a usual apparatus without the need for a special adding apparatus. However, when mixing the thickener component in the AE water-reducing agent, the stability of this solution often became a problem, and the preceding Patent Literature 2 does not specify the components of the thickener. Moreover, according to investigation by the present inventors, it was understood that, depending on the components of the thickener, there is a problem of sedimentation of specific components depending on the affinity with the components of other AE water-reducing agents (hereinunder described as 'compatibility'). Moreover, the extent to which the flow retainability improved was only that to which the slump value improved by about 5 cm after 60 minutes.

Moreover, in a lean concrete mix with a high water-cement ratio, there is a tendency for bleeding to easily occur in which, after the placement of concrete, water increases and the aggregate and hydraulic binder such as cement become sedimented. If bleeding occurs, the water-tightness of concrete deteriorates, and thus bleeding is required to be suppressed especially for a lean concrete mix with a high water-cement ratio. In particular, there was a problem in concrete of which a blast furnace cement was utilized (where the blast furnace cement is a cement in which a blast furnace slag fine powder was mixed in), where if the water-cement ratio is raised, then the flow retainability not only deteriorates but much bleeding occurs.

### [Citation List]

### [Patent Literature]

[Patent Literature 1] JP 3065476 B
[Patent Literature 2] JP 6076722 B

### [Summary of Invention]

### [Technical Problem]

Taking the aforementioned circumstance into consideration, the objective of the present invention is to provide an admixture for concrete which not only has excellent compatibility as an admixture but also, for the concrete in which the admixture was used, an excellent flow retainability over a long time of 120 minutes until the placement of the concrete without loss of strength, and in which a workable time and constructability are obtainable because a suitable setting time is obtained, and in which bleeding is suppressible.

### [Solution to Problem]

The gist of the constituents of the present invention are as follows.
[1] Admixture for concrete, comprising a lignin derivative (A), a copolymer having a hydrolysable group (B) and a (meth)acrylic-based viscosity adjusting component (C), wherein the copolymer having a hydrolysable group (B) is a copolymer of at least two monomers consisting of an ethylenically unsaturated monomer having hydrolysability (b1) and an ethylenically unsaturated monomer having a polyalkyleneoxide ether chain (b2).
[2] Admixture for concrete described in [1], further comprising a hydroxycarboxylic acid and/or saccharide (D).
[3] Admixture for concrete described in [1] or [2], wherein the molar ratio of the ethylenically unsaturated monomer having hydrolysability (b1) is 0.50 or more and 10 or less, based on the ethylenically unsaturated monomer having a polyalkyleneoxide ether chain (b2).
[4] Admixture for concrete described in [1] or [2], wherein the molar ratio of the ethylenically unsaturated monomer having hydrolysability (b1) is 1.1 or more and 5.0 or less, based on the ethylenically unsaturated monomer having a polyalkyleneoxide ether chain (b2).
[5] Admixture for concrete described in any one of [1] to [4], wherein the ethylenically unsaturated monomer having hydrolysability (b1) is a compound represented by the following general formula (1): 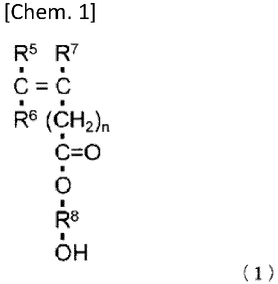 (wherein R⁵, R⁶, R⁷ each independently represents hydrogen or a methyl group; R⁸ represents an alkylene group of carbon number 2 to 20; and n represents an integer of 0 to 2.).
[6] Admixture for concrete described in any one of [1] to [5], wherein the ethylenically unsaturated monomer having a polyalkyleneoxide ether chain (b2) is a compound represented by the following general formula (2): 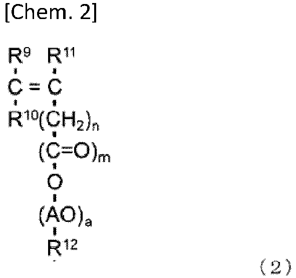 (wherein R⁹, R¹⁰, R¹¹ each independently represents hydrogen or a methyl group; R¹² represents hydrogen, a methyl group or an aliphatic hydrocarbon group of carbon number 2 to 20; AO represents an alkyleneoxide group of carbon number 2 to 4; a represents an integer of 1 to 350; m represents an integer of 0 or 1; and n represents an integer of 0 to 2.).
[7] Admixture for concrete described in any one of [1] to [6], wherein the (meth)acrylic-based viscosity adjusting component (C) is a polymer comprising, as a constituent unit, a monomer which is a sulfo-group-containing (meth)acrylic acid derivative.
[8] Admixture for concrete described in any one of [1] to [7], wherein the number average molecular weight of the (meth)acrylic-based viscosity adjusting component (C) is in the range of 50,000 g/mol or more and 20,000,000 g/mol or less.
[9] Admixture for concrete described in [7], wherein the polymer comprising, as a constituent unit, a monomer which is a sulfo-group-containing (meth)acrylic acid derivative, is a compound having a constituent unit represented by the following general formula (3): 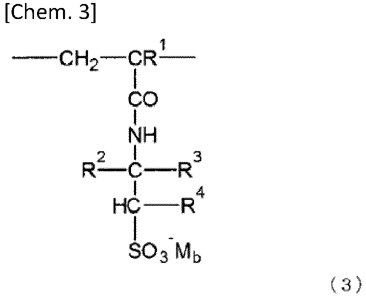 (wherein R¹ represents hydrogen or a methyl group; R², R³, R⁴ each independently represents hydrogen, an aliphatic hydrocarbon group of carbon number 1 to 6, or a phenyl group which may be substituted with a methyl group; M represents hydrogen, sodium, potassium, calcium, magnesium, ammonium, or ammonium substituted with an organic group; and b represents 1/2 or 1.).
[10] Admixture for concrete described in any one of [1] to [9], wherein 0.50% by mass or more and 20.0% by mass or less of the lignin derivative (A) is contained in the admixture for concrete.
[11] Admixture for concrete described in any one of [1] to [10], wherein 0.50% by mass or more and 30.0% by mass or less of the copolymer having a hydrolysable group (B) is contained in the admixture for concrete.
[12] Admixture for concrete described in any one of [1] to [11], wherein 0.001% by mass or more and 0.150% by mass or less of the (meth)acrylic-based viscosity adjusting component (C) is contained in the admixture for concrete.
[13] Admixture for concrete described in any one of [1] to [12], wherein 0.10% by mass or more and 20.0% by mass or less of the hydroxycarboxylic acid and/or saccharide (D) is contained in the admixture for concrete.
[14] Concrete, containing the admixture for concrete described in any one of [1] to [12], wherein a water-cement ratio, which indicates the ratio of a mass of water to a mass of cement, is 45% or more.
[15] Concrete, containing the admixture for concrete described in any one of [1] to [12], and containing more than 30% by mass of blast furnace slag.
[16] Use of admixture for concrete described in any one of [1] to [12], wherein the admixture is added to concrete with a water-cement ratio, which indicates the ratio of a mass of water to a mass of cement, of 45% or more.
[17] Use of the admixture for concrete described in any one of [1] to [12], wherein the admixture is added to concrete containing more than 30% by mass of blast furnace slag.

### [Advantageous Effects of Invention]

According to an aspect of the admixture for concrete of the present invention, the admixture for concrete contains a lignin derivative (A), a copolymer having a hydrolysable group (B), and a (meth)acrylic-based viscosity adjusting component (C), and because the copolymer having a hydrolysable group (B) is a copolymer of at least two monomers consisting of an ethylenically unsaturated monomer having hydrolysability (b1) and an ethylenically unsaturated monomer having a polyalkyleneoxide ether chain (b2), the admixture for concrete of the present invention is, as an admixture, excellent in compatibility and has an excellent flow retainability over a long time of 120 minutes until the placement of the concrete without loss of strength. Further, a workable time and constructability are obtainable because a suitable setting time is obtained, and occurrence of bleeding is suppressible. In particular, according to an aspect of the admixture for concrete of the present invention, even for a lean concrete mix with a high water-cement ratio, flow retainability is excellent with no loss of strength. Moreover, not only are workable time and constructability obtainable because a suitable setting time is obtained, but the occurrence of bleeding is also suppressible.

According to an aspect of the admixture for concrete of the present invention, by further containing a hydroxycarboxylic acid and/or saccharide (D), flow retainability is further improvable, and in particular, excellent flow retainability is obtainable even under a high temperature environment (e.g. 30°C or higher).

According to an aspect of the admixture for concrete of the present invention, because the molar ratio of the ethylenically unsaturated monomer having hydrolysability (b1) based on the ethylenically unsaturated monomer having a polyalkyleneoxide ether chain (b2) is 0.50 or more and 10 or less, excellent flow retainability is reliably obtainable. Moreover, because the molar ratio of the ethylenically unsaturated monomer having hydrolysability (b1) based on the ethylenically unsaturated monomer having a polyalkyleneoxide ether chain (b2) is 1.1 or more and 5.0 or less, the flow retainability is further improved over a longer time.

According to an aspect of the admixture for concrete of the present invention, by containing 0.50% by mass or more and 20.0% by mass or less of the lignin derivative (A) in the admixture for concrete, sufficient integrity and excellent flow retainability is reliably obtainable whilst excessive viscosity increase and excess water-reducibility of concrete are reliably preventable, hence constructability and handleability are obtainable. The term 'integrity' indicates that the integrity of aggregate and cement paste is good, and that the aggregate is in a state of being difficult to separate.

According to an aspect of the admixture for concrete of the present invention, by containing 0.50% by mass or more and 30.0% by mass or less of the copolymer having a hydrolysable group (B), excellent flow retainability is reliably obtainable whilst excess water-reducibility is preventable.

According to an aspect of the admixture for concrete of the present invention, by containing 0.001% by mass or more and 0.150% by mass or less of the (meth)acrylic-based viscosity adjusting component (C), the compatibility of the admixture is further excellent, and sufficient integrity and excellent flow retainability are reliably obtained whilst an excessive viscosity increase of concrete and a reduced compatibility of an admixture for concrete are preventable. Moreover, according to an aspect of the admixture for concrete of the present invention, by containing 0.10% by mass or more and 20.0% by mass or less of the hydroxycarboxylic acid and/or saccharide (D), excellent flow retainability is reliably obtained whilst suitable water-reducibility and retardation of setting are obtainable.

### [Description of Embodiments]

The admixture for concrete of the present invention comprises a lignin derivative (A), a copolymer having a hydrolysable group (B), and a (meth)acrylic-based viscosity adjusting component (C), where the copolymer having a hydrolysable group (B) is a copolymer of at least two monomers consisting of an ethylenically unsaturated monomer having hydrolysability (b1) and an ethylenically unsaturated monomer having a polyalkyleneoxide ether chain (b2). The admixture for concrete of the present invention is a solution of which the aforementioned components are dispersed and dissolved in a dispersion medium (such as water).

The admixture for concrete of the present invention contains a lignin derivative (A), a copolymer having a hydrolysable group (B), and a (meth)acrylic-based viscosity adjusting component (C), and because the copolymer having a hydrolysable group (B) is a copolymer of at least two monomers consisting of an ethylenically unsaturated monomer having hydrolysability (b1) and an ethylenically unsaturated monomer having a polyalkyleneoxide ether chain (b2), the admixture for concrete of the present invention is, as an admixture, is excellent in compatibility and has an excellent flow retainability over a longtime of 120 minutes until the placement of the concrete without loss of strength. Further, a workable time and constructability are obtainable because a suitable setting time is obtained, and the occurrence of bleeding is suppressible. In particular, even for a lean concrete mix with a water-cement ratio of 45% or more, which indicates the ratio of the mass of water to the mass of cement, flow retainability is excellent with no loss of strength. Moreover, not only are workable time and constructability obtainable because a suitable setting time is obtained, but the occurrence of bleeding is also reliably suppressible.

The aforementioned components of the admixture for concrete of the present invention are explained in detail below.

### < Lignin derivative (A) >

The lignin derivative contributes to imparting a suitable water-reducibility and state of integrity, and to imparting an excellent flow retainability, even for a lean concrete mix with a high water-cement ratio. The lignin derivative can be a lignin sulfonic acid-based lignin derivative, and a lignin derivative which is a reaction product of a lignin sulfonic acid-based compound and an aromatic water-soluble compound, etc. The lignin derivative can also be a lignin sulfonic acid-based dispersing agent (AE water-reducing agent).

The content (solid content) of the lignin derivative is not particularly limited, but from the view of reliably obtaining sufficient integrity and excellent flow retainability, the lower limit value thereof in the admixture for concrete is preferably 0.50% by mass, more preferably 2.00% by mass, and particularly preferably 5.00% by mass. Meanwhile, from the view of reliably preventing an excessive viscosity increase of concrete and excess water-reducibility, and obtaining constructability and handleability, the upper limit value of the content (solid content) of the lignin derivative in the admixture for concrete is preferably 20.0% by mass, and particularly preferably 15.0% by mass.

### < Copolymer having a hydrolysable group (B) >

The copolymer having a hydrolysable group is a copolymer of at least two monomers consisting of an ethylenically unsaturated monomer having hydrolysability (b1) and an ethylenically unsaturated monomer having a polyalkyleneoxide ether chain (b2). Therefore, the copolymer having a hydrolysable group is a copolymer of at least two monomers consisting, as essential constituent components, of an ethylenically unsaturated monomer having hydrolysability and an ethylenically unsaturated monomer having a polyalkyleneoxide ether chain. Accordingly, the copolymer having a hydrolysable group has a constituent unit derived from an ethylenically unsaturated monomer having hydrolysability and a constituent unit derived from an ethylenically unsaturated monomer having a polyalkyleneoxide ether chain.

The mixing in of a copolymer having a hydrolysable group thereby obtains a suitable setting time and bleeding suppressing properties whilst contributing to excellent flow retainability. Moreover, the copolymer having a hydrolysable group produces active binding sites to a hydraulic cement composition such as cement because the hydrolysable group is hydrolysed, and thus the copolymer having residues of the ethylenically unsaturated monomer, of which the hydrolysable group was hydrolysed, have improved dispersibility in concrete. A carboxylic acid group is preferable as the active binding sites to a hydraulic cement composition.

### Ethylenically unsaturated monomer having hydrolysability (b1)

The ethylenically unsaturated monomer having hydrolysability is a monomer which produces, by hydrolysis, active binding sites to a hydraulic cement composition, under an alkaline environment in the hydraulic cement composition etc. The structural units derived from the ethylenically unsaturated monomer having hydrolysability, together with the structural units derived from the ethylenically unsaturated monomer having a polyalkyleneoxide ether chain, obtain a suitable setting time and bleeding suppressing properties whilst contributing to excellent flow retainability. Moreover, the structural units derived from the ethylenically unsaturated monomer having hydrolysability, when hydrolysed, produce active binding sites to a hydraulic cement composition, and the copolymer having residues of the ethylenically unsaturated monomer of which the hydrolysable group was hydrolysed can be uniformly dispersed in concrete. Examples of the ethylenically unsaturated monomer having hydrolysability can include for example (meth)acrylic acid esters, which is an ethylenically unsaturated monomer having an ester functional group. Amongst the (meth)acrylic acid esters which are ethylenically unsaturated monomers having hydrolysability, acrylic acid ester is preferable, hydroxyalkyl acrylate is more preferable, and hydroxyethyl acrylate and hydroxypropyl acrylate are particularly preferable.

An example of the ethylenically unsaturated monomer having hydrolysability can be a compound represented by the following general formula (1): 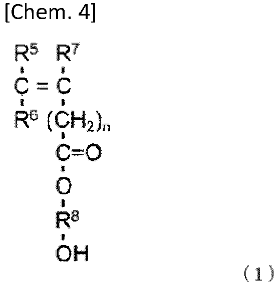 (wherein R⁵, R⁶, R⁷ each independently represents hydrogen or a methyl group; R⁸ represents an alkylene group of carbon number 2 to 20; and n represents an integer of 0 to 2.). Of these, R⁷ is preferably hydrogen; R⁸ is preferably an alkylene group of carbon number 2 to 10 and particularly preferably an alkylene group of carbon number 2 to 4.

In the compound of general formula (1), the compound represented by HO-R⁸-OH is released from the copolymer because the ester bond is hydrolysed.

### Ethylenically unsaturated monomer having a polyalkyleneoxide ether chain (b2)

The structural units derived from the ethylenically unsaturated monomer having a polyalkyleneoxide ether chain, together with the structural units derived from the ethylenically unsaturated monomer having hydrolysability, obtain a suitable setting time and bleeding suppressing properties whilst contributing to excellent flow retainability.

The repeating unit of the polyalkyleneoxide ether chain of the ethylenically unsaturated monomer having a polyalkyleneoxide ether chain is preferably 2 or more, and is particularly preferably 10 or more. An example of the ethylenically unsaturated monomer having a polyalkyleneoxide ether chain can be a compound represented by the following general formula (2): 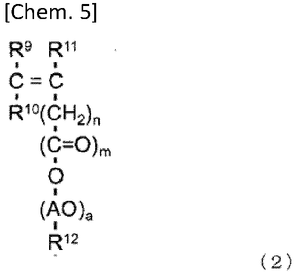 (wherein R⁹, R¹⁰, R¹¹ each independently represents hydrogen or a methyl group; R¹² represents hydrogen, a methyl group or an aliphatic hydrocarbon group of carbon number 2 to 20; AO represents an alkyleneoxide group of carbon number 2 to 4; a represents an integer of 1 to 350; m represents an integer of 0 or 1; and n represents an integer of 0 to 2.). Of these, R¹¹ is preferably a methyl group, and R¹¹ is particularly preferably a methyl group when m is 1 and n is 0. Moreover, R¹² is preferably hydrogen, a methyl group or an aliphatic hydrocarbon group of carbon number 2 to 5, and is particularly preferably hydrogen or a methyl group. Moreover, a is not particularly limited if it represents an integer of 1 to 350, but the lower limit value thereof is preferably 2, more preferably 3, further preferably 5, particularly preferably 10, and most preferably 20. Meanwhile, the upper limit value of a is preferably 200, and particularly preferably 100.

Moreover, the copolymer having a hydrolysable group may also have structural units derived from an ethylenically unsaturated monomer other than the ethylenically unsaturated monomer having hydrolysability and the ethylenically unsaturated monomer having a polyalkyleneoxide ether chain (hereinunder 'another ethylenically unsaturated monomer') as required. An example of another ethylenically unsaturated monomer can be an unsaturated carboxylic acid. Because the copolymer having a hydrolysable group has further structural units derived from an unsaturated carboxylic acid, dispersibility can be exhibited later.

Examples of the unsaturated carboxylic acid can include: monocarboxylic acids such as (meth)acrylic acid and crotonic acid; and dicarboxylic acids such as maleic acid, itaconic acid and fumaric acid.

The molar ratio of the ethylenically unsaturated monomer having hydrolysability to the ethylenically unsaturated monomer having a polyalkyleneoxide ether chain (mole number of the (b1) component / mole number of the (b2) component) is not particularly limited, but from the view of excellent flow retainability being reliably obtainable, the molar ratio is preferably 0.50 or more and 10 or less, and more preferably 0.75 or more and 7.5 or less. From the view of further improving flow retainability over a longer time, the molar ratio is further preferably 1.1 or more and 5.0 or less, and particularly preferably 2.5 or more and 3.5 or less.

Moreover, when comprising structural units derived from another ethylenically unsaturated monomer, the molar ratio of another ethylenically unsaturated monomer to the ethylenically unsaturated monomer having a polyalkyleneoxide ether chain (mole number of another ethylenically unsaturated monomer / mole number of the (b2) component) is not particularly limited, but is selectable within the range that the effect of the present invention is not impaired, and for example is preferably 0.10 or more and 2.00 or less, and particularly preferably 0.20 or more and 1.50 or less.

The content (solid content) of the copolymer having a hydrolysable group which is a (B) component is not particularly limited, but from the view of reliably obtaining excellent flow retainability, the lower limit value thereof in the admixture for concrete is preferably 0.50% by mass, more preferably 1.00% by mass, and particularly preferably 1.20% by mass. Meanwhile, from the view of preventing an excess water-reducibility, the upper limit value of the content of the copolymer having a hydrolysable group is preferably 30% by mass, more preferably 20% by mass, further preferably 10% by mass, and particularly preferably 9.00% by mass.

### < (Meth)acrylic-based viscosity adjusting component (C) >

By mixing a (meth)acrylic-based viscosity adjusting component, compatibility as an admixture is excellent, and prescribed viscosity is imparted in concrete in which the (meth)acrylic-based viscosity adjusting component was used. Moreover, even for a lean concrete mix, the (meth)acrylic-based viscosity adjusting component can also contribute to imparting excellent flow retainability and integrity. An example of the (meth)acrylic-based viscosity adjusting component is a (meth)acrylamide-based viscosity adjusting component. Moreover, an example of the (meth)acrylic-based viscosity adjusting component can be a polymer containing, as a constituent unit, a monomer which is a sulfo-group-containing (meth)acrylic acid derivative. An example of the polymer containing, as a constituent unit, a monomer which is a sulfo-group-containing (meth)acrylic acid derivative can be a compound having a constituent unit represented by the following general formula (3): 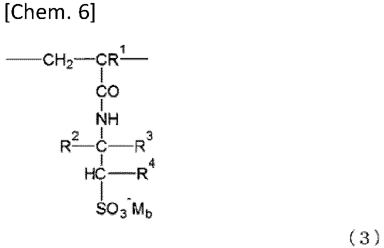 (wherein R¹ represents hydrogen or a methyl group; R², R³, R⁴ each independently represents hydrogen, an aliphatic hydrocarbon group of carbon number 1 to 6, or a phenyl group which may be substituted with a methyl group; M represents hydrogen, sodium, potassium, calcium, magnesium, ammonium, or ammonium substituted with an organic group; and b represents 1/2 or 1.). The compound having a constituent unit represented by general formula (3) is a water-soluble polymer having a sulfo-group-containing (meth)acrylic acid derivative structure.

A preferred example of the water-soluble polymer having a sulfo-group-containing (meth)acrylic acid derivative structure is a water-soluble polymer which is a polymer containing, as a constituent unit, the below monomers (a) and (b). Moreover, the water-soluble polymer having a sulfo-group-containing (meth)acrylic acid derivative structure may also optionally be a polymer further containing, as a constituent unit, (c), (d) and/or (e). Thereby, even for a variety of concrete materials and concrete mixtures, the required viscosity and separating resistance of materials can be imparted to concrete.

Monomer (a) is a monomer derived from a constituent unit represented by general formula (3). Monomer (a) preferably includes 2-acrylamide-2-methylpropane sulfonic acid, 2-methacrylamide-2-methylpropane sulfonic acid, 2-acrylamide butane sulfonic acid, 3-acrylamide-3-methyl butane sulfonic acid, 2-acrylamide-2, 4, 4-trimethyl pentane sulfonic acid, and is particularly preferably 2-acrylamide-2-methylpropane sulfonic acid.

Monomer (b) is preferably a monomer derived from a constituent unit represented by the following general formula (4):

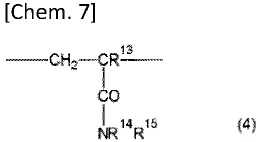

In general formula (4), R¹³ represents hydrogen or a methyl group; and R¹⁴ and R¹⁵ each independently represents hydrogen, an aliphatic hydrocarbon group containing 1 to 20 carbon atoms, an alicyclic hydrocarbon group containing 5 to 8 carbon atoms, or an aryl group containing 6 to 14 carbon atoms.

Monomer (b) is acrylamide, methacrylamide, N-methyl acrylamide, N,N-dimethyl acrylamide, N-ethyl acrylamide, N-cyclohexyl acrylamide, N-benzyl acrylamide, N-methylol acrylamide and N-t-butyl acrylamide etc.

Monomer (c) is preferably a monomer derived from a constituent unit represented by the following general formula (5):

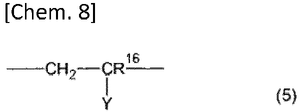

In general formula (5), R¹⁶ represents hydrogen or a methyl group; Y represents -COO(CₜH₂ₜO)ₚ-R²¹ or -(CH_{z})_{q}-O(CₙH₂ₙO)ₚ-R²¹; R²¹ represents 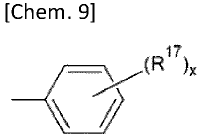 or an unsaturated or saturated, straight or branched aliphatic alkyl group containing 10 to 40 carbon atoms; R¹⁷ represents H, C₁ to C₆ alkyl, or an arylalkyl group having a C₁ to C₁₂ alkyl group and a C₆ to C₁₄ aryl group; t represents 2 to 4; p represents 0 to 200; q represents 0 to 20; and x represents 0 to 3.

Monomer (c) is tristyryl phenol polyethylene glycol (1100)-methacrylate, behenyl polyethylene glycol (1100)-methacrylate, stearyl polyethylene glycol (1100)-methacrylate, tristyryl phenol-polyethylene glycol (1100)-acrylate, tristyryl phenol-polyethylene glycol (1100)-monovinyl ether, behenyl polyethylene glycol (1100)-monovinyl ether, stearyl polyethylene glycol (1100)-monovinyl ether, tristyryl phenol-polyethylene glycol (1100)-vinyloxy-butyl ether, behenyl polyethylene glycol (1100)-vinyloxy-butyl ether, tristyryl phenol polyethylene glycol-block-propylene glycol allyl ether, behenyl polyethylene glycol-block-propylene glycol allyl ether, and stearyl polyethylene glycol-block-propylene glycol allyl ether, etc.

Monomer (d) is preferably a monomer derived from a polyethylene glycol-block-propylene glycol (500 to 5000)-vinyloxy-butyl ether, and can be allyl polyethylene glycol (350 to 2000), methyl polyethylene glycol (350 to 2000)-monovinyl ether, polyethylene glycol (500 to 5000)-vinyloxy-butyl ether, polyethylene glycol-block-propylene glycol (500 to 5000)-vinyloxy-butyl ether, and methyl polyethylene glycol-block-propylene glycol allyl ether, etc.

Monomer (e) is preferably a monomer derived from a constituent unit represented by the following general formula (6).

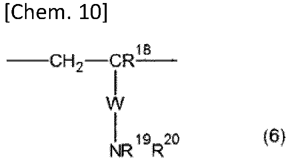

In general formula (6), R¹⁸ represents hydrogen or a methyl group; R¹⁹ and R²⁰ each independently represents hydrogen, an aliphatic hydrocarbon group containing 1 to 20 carbon atoms, an alicyclic hydrocarbon group containing 5 to 8 carbon atoms, or an aryl group containing 6 to 14 carbon atoms; W represents -CO-O-(CH₂)ₛ- or -CO-NR²²-(CH₂)ₛ-; R²² represents hydrogen, an aliphatic hydrocarbon group of carbon number 1 to 6, or a phenyl group which may be substituted with a methyl group; and s represents 1 to 6.

Monomer (e) is [3-(methacryloylamino)-propyl]-dimethylamine, [3-(acryloylamino)-propyl]-dimethylamine, [2-(methacryloyl-oxy)-ethyl]-dimethylamine, [2-(acryloyl-oxy)-ethyl]-dimethylamine, [2-(methacryloyl-oxy)-ethyl]-diethylamine, and [2-(acryloyl-oxy)-ethyl]-diethylamine, etc.

The (meth)acrylic-based viscosity adjusting component, as a constituent unit, is preferably monomer (a) : monomer (b) : monomer (c) : monomer (d) : monomer (e) = 3 to 96 mol% : 3 to 96 mol% : 0 to 10 mol% (particularly preferably 0.1 mol% to 8 mol%) : 0 to 30 mol% : 0 to 20 mol%.

If the content of monomer (a) is less than 3 mol%, the solubility of the (meth)acrylic-based viscosity adjusting component in water tends to become reduced and if the content of monomer (a) exceeds 96 mol%, the imparting of a separating resistance of materials to a variety of concrete tends to become difficult. Moreover, if the content of monomer (b) is less than 3 mol%, the imparting of a separating resistance of materials to a variety of concrete tends to become difficult and if the content of monomer (b) exceeds 96 mol%, the solubility of the (meth)acrylic-based viscosity adjusting component in water tends to become reduced. Moreover, if the content of monomer (c) is more than 10 mol% or the content of monomer (d) is more than 30 mol% or the content of monomer (e) is more than 20 mol%, the imparting of a separating resistance of materials to a variety of concrete tends to become difficult. The content of the monomer constituting the (meth)acrylic-based viscosity adjusting component is more preferably monomer (a) : monomer (b) : monomer (c) : monomer (d) : monomer (e) = 20 to 75 mol% : 10 to 65 mol% : 0 to 10 mol% (particularly preferably 0.1 mol% to 8 mol%) : 0 to 15 mol% : 0 to 15 mol%.

Moreover, by incorporating a small amount of crosslinking agent in the (meth)acrylic-based viscosity adjusting component as required, a branched or crosslinked structure in the structure can be imparted. Examples of the crosslinking agent are triallyl amine, triallyl methyl ammonium chloride, tetra allyl ammonium chloride, N,N'-methylene-bis-acrylamide, triethylene glycol-bis-methacrylate, triethylene glycol-bis-acrylate, polyethylene glycol (400)-bis-methacrylate and polyethylene glycol (400)-bis-acrylate. The crosslinking agent can be utilized in an amount to the extent that the action of the (meth)acrylic-based viscosity adjusting component is not inhibited, and is preferably 0.1 mol% or lower based on the total of the monomers (a), (b), (c), (d) and (e).

The (meth)acrylic-based viscosity adjusting component can be prepared by gel polymerization in a water phase, and is preferably polymerized by means of a suitable initiator system in a low reaction temperature. Two initiator system combinations (an azo initiator and a redox system) can achieve a reaction rate of 99% or more, in which the polymerization initially begins photochemically at a low temperature but afterwards thermal polymerization begins due to the heat generation of the polymerization reaction.

Gel polymerization is preferably carried out at -5 to 50°C, and the concentration of aqueous solution is adjusted to preferably 35 to 70% by mass. For the gel polymerization, a sulfo-group-containing (meth)acrylic acid derivative which is normally commercially available on the market is preferably dissolved in water, neutralized by adding an alkali metal hydroxide, and the monomers and a buffer, a molecular weight adjusting agent and other polymerization adjuvants are mixed whilst being stirred. Moreover, the gel polymerization is particularly preferably carried out in a pH range of 4 to 9, flashed with a protective gas such as helium or nitrogen, and then heated or cooled to the prescribed temperature.

If selecting unstirred gel polymerization, the polymerization is carried out with a layer thickness of preferably 2 to 20 cm, and particularly preferably 8 to 10 cm under an adiabatic reaction condition. The polymerization begins by adding a polymerization initiator and by irradiation of UV light at low temperature (-5 to 10°C). Once the monomer reaction has completed, the resultant polymer is preferably gently crushed by means of a stripping agent, in order to promote drying due to the surface area being increased.

By setting the gentlest reaction and drying conditions as possible, a secondary crosslinking reaction can be avoided, and therefore a polymer having a very low gel content ratio is obtainable.

The number average molecular weight of the (meth)acrylic-based viscosity adjusting component is preferably 50,000 to 20,000,000 g/mol. If the number average molecular weight of the (meth)acrylic-based viscosity adjusting component is less than 50,000 g/mol, the reliable imparting of suitable viscosity to concrete tends to become impossible, and if the number average molecular weight exceeds 20,000,000 g/mol, the solubility of the (meth)acrylic-based viscosity adjusting component in fluidizing components tends to reduce; moreover, the viscosity of the admixture for concrete tends to increase thus reducing the constructability. In the present specification, "number average molecular weight" means the number average molecular weight measured by gel-permeation chromatography in pullulan conversion.

The content (solid content) of the (meth)acrylic-based viscosity adjusting component is not particularly limited, but from the view of reliably obtaining sufficient integrity and excellent flow retainability, the lower limit value thereof in the admixture for concrete is preferably 0.001% by mass, more preferably 0.01% by mass, and particularly preferably 0.030% by mass. Meanwhile, from the view of preventing an excessive viscosity increase of concrete and a reduced compatibility of an admixture for concrete, the upper limit value of the content of the (meth)acrylic-based viscosity adjusting component is preferably 0.150% by mass, more preferably 0.120% by mass, further preferably 0.100% by mass, and particularly preferably 0.080% by mass.

In the admixture for concrete of the present invention, a hydroxycarboxylic acid and/or saccharide (D) may also be further mixed in as required. Furthermore, the containing of the hydroxycarboxylic acid and/or a saccharide can further improve flow retainability, and in particular, excellent flow retainability can be obtained even under a high temperature environment (e. g., 30°C or more).

Examples of the hydroxycarboxylic acid can include: gluconic acid, citric acid, malic acid, glycolic acid, and a metal salt such as a sodium of the aforementioned hydroxycarboxylic acids. Moreover, examples of the saccharide are monosaccharide, disaccharide, oligosaccharide, and starch saccharide. Amongst these saccharides, glucose, fructose, xylose, maltose, lactose, saccharose, and dextrin are preferred. These saccharides may be used alone, or used in combination of two or more.

The content (solid content) of the hydroxycarboxylic acid and/or a saccharide is not particularly limited, but when mixing a hydroxycarboxylic acid and/or a saccharide, from the view of reliably obtaining excellent flow retainability even under a high temperature (e.g. 30°C or more) environment, the lower limit value thereof in the admixture for concrete is preferably 0.10% by mass, more preferably 1.00% by mass, and particularly preferably 2.00% by mass. Meanwhile, from the view of obtaining a suitable water-reducibility and retardation of setting, the upper limit value of the content of the hydroxycarboxylic acid and/or a saccharide in the admixture for concrete is preferably 20.0% by mass, more preferably 15.0% by mass, and particularly preferably 10.0% by mass.

In the admixture for concrete of the present invention, a copolymer having no hydrolysable group may also be further mixed in as required. The containing of a copolymer having no hydrolysable group can further contribute to the improvement of water-reducibility and flow retainability.

Examples of copolymers having no hydrolysable group are: (meth)acrylic acid-polyalkylene glycol (meth)acrylic acid ester copolymer (preferably, (meth)acrylic acid-polyalkylene glycol methacrylic acid ester copolymer), acrylic acid-polyalkylene glycol vinyl ether copolymer, acrylic acid-maleic acid-polyalkylene glycol vinyl ether copolymer, maleic acid-polyalkylene glycol vinyl ether copolymer, acrylic acid-polyalkylene glycol allyl ether copolymer, acrylic acid-maleic acid-polyalkylene glycol allyl ether copolymer, maleic acid-polyalkylene glycol allyl ether copolymer, acrylic acid-polyalkylene glycol methallyl ether copolymer, acrylic acid-maleic acid-polyalkylene glycol methallyl ether copolymer, maleic acid-polyalkylene glycol methallyl ether copolymer, acrylic acid-polyalkylene glycol isoprenyl ether copolymer, acrylic acid-maleic acid-polyalkylene glycol isoprenyl ether copolymer, and maleic acid-polyalkylene glycol isoprenyl ether copolymer.

The content (solid content) of the copolymer having no hydrolysable group is not particularly limited, but when mixing a copolymer having no hydrolysable group, from the view of reliably contributing to the improvement of water-reducibility and flow retainability, the lower limit value thereof in the admixture for concrete is preferably 1.00% by mass, and particularly preferably 2.00% by mass. Meanwhile, from the view of obtaining a suitable water-reducibility, the upper limit value of the content of the copolymer having no hydrolysable group in the admixture for concrete is preferably 10 parts by mass, more preferably 5.00% by mass, and particularly preferably 4.00% by mass.

The solid content of the admixture for concrete of the present invention containing the aforementioned components is not particularly limited, but is preferably 15.0% by mass or more and 40.0% by mass or less, and particularly preferably 20.0% by mass or more and 35.0% by mass or less. Moreover, the dispersion medium of the solid content of the admixture for concrete of the present invention is preferably water.

Moreover, the amount of the admixture for concrete of the present invention added to a hydraulic binder such as cement is not particularly limited, but is preferably 0.30 parts by mass or more and 2.00 parts by mass or less, and particularly preferably 0.50 parts by mass or more and 1.50 parts by mass or less, based on 100 parts by mass of a hydraulic binder such as cement.

Examples of concrete in which the admixture for concrete of the present invention is used are: lean concrete mix having a water-cement ratio, which indicates the ratio of the mass of waterto the mass of cement, of 45% or more. The water-cement ratio of the concrete in which the admixture for concrete of the present invention is used may also be 50% or more, or 60% or more. Moreover, the upper limit of the water-cement ratio of the concrete in which the admixture for concrete of the present invention is used, is 70% or 65%.

Examples of the cement which is mixed in concrete are: hydraulic cement such as portland cement, calcium aluminate cement, magnesium phosphate cement, magnesium potassium phosphate cement, sulfoaluminate cement, pozzolanic cement, and slag cement. In the case of a lean concrete mix, a slag cement is utilized in some cases, where a slag cement containing blast furnace slag is mentioned as the slag cement. The blast furnace cement is categorized into three types in accordance with the amount of blast furnace slag fine powder mixed in, and in accordance with JIS A 5211: type A (more than 5% by mass and 30% by mass or less); type B (more than 30% by mass and 60% by mass or less); and type C (more than 60% by mass and 70% by mass or less). Amongst these, type B is the most produced, and is utilized in a wide range of fields. Moreover, the amount of blast furnace slag fine powder is also measured separately to the cement and mixed into concrete. However, in the case of mixed cement, or in the case that the amount of blast furnace slag fine powder is measured separately to the amount of cement, if the mixture amount of the blast furnace slag fine powder is increased, the amount of concrete admixture added for obtaining the required water-reducibility tends to be decreased, and thus it may be the case that desired performance, in particular flow retainability is not obtained. In the admixture for concrete according to the present invention, flow retainability is effectively improved, particularly when the mixture amount of the blast furnace slag fine powder is more than 30% by mass and 70% by mass or less. Furthermore, when the mixture amount of the blast furnace slag fine powder is more than 30% by mass and 60% by mass or less, flow retainability is further effectively improved. When the slag is mixed in at 70% or more, the bleeding suppressing effect tends to become lowered, concrete strength and durability tends to become deteriorated, and the various properties as a concrete tends to become somewhat deteriorated.

Moreover, in addition to a hydraulic binder such as cement, an aggregate is also mixed in the concrete. The aggregates are silica, quartz, sand, pulverized marble, glass beads, granite, limestone, calcite, feldspar, alluvial sand, any other durable aggregate, and mixtures thereof.

### [Examples]

The admixture for concrete of the present invention and cement compositions using the same are explained in detail below, referring to the examples. Note that the present invention is not limited to the examples shown below.

The constituent monomers for the copolymers utilized in the Examples and Comparative Examples are shown below in Table 1. As shown in the below Table 1, Copolymers 1 to 5 are copolymers having a hydrolysable group, and Copolymers 6 and 7 are copolymers having no hydrolysable group.

**[Table 1]**

| | Hydrolysable monomer | | Monomers having a polyalkyleneoxide ether chain | | Unsaturated carboxylic acid | |
|---|---|---|---|---|---|---|
| | Type | Molar ratio | Type | Molar ratio | Type | Molar ratio |
| Copolymer 1 | Hydroxypropyl acrylate | 0.32 | Polyethylene glycol (degree of polymerization 26) monovinyl ether | 1.00 | Maleic acid | 0.44 |
| | | | | | Acrylic acid | 0.37 |
| Copolymer 2 | Hydroxypropyl acrylate | 0.86 | Polyethylene glycol (degree of polymerization 12) monoallyl ether | 1.00 | Maleic acid | 0.29 |
| Copolymer 3 | Hydroxypropyl acrylate | 0.80 | Polyethylene glycol (degree of polymerization 25) monomethacrylic acid ester | 1.00 | Acrylic acid | 1.10 |
| | Hydroxyethyl acrylate | 0.80 | | | | |
| Copolymer 4 | Hydroxyethyl acrylate | 3.20 | Polyethylene glycol (degree of polymerization 12) monovinyl ether | 1.00 | Maleic acid | 0.30 |
| Copolymer 5 | Hydroxyethyl acrylate | 4.10 | Polyethylene glycol (degree of polymerization 26) monovinyl ether | 1.00 | - | - |
| Copolymer 6 | - | - | Polyethylene glycol (degree of polymerization 35) monoisoprenyl ether | 1.00 | Acrylic acid | 2.60 |
| Copolymer 7 | - | - | Polyethylene glycol (degree of polymerization 25) monomethacrylic acid ester | 1.00 | Methacrylic acid | 2.30 |

The constituent monomers for the (meth)acrylic-based viscosity adjusting components utilized in the Examples and Comparative Examples are shown below in Table 2.

**[Table 2]**

| (Meth)acrylic-based viscosity adjusting component | Monomer (a) | | Monomer (b) | | Monomer (c) | | Monomer (d) | | Monomer (e) | | Molecular weight |
|---|---|---|---|---|---|---|---|---|---|---|---|
| | Type | mol% | Type | mol% | Type | mol% | Type | mol% | Type | mol% | (g/mol) |
| Polymer 1 | 2-acrylamide-2-methylpropane sulfonic acid | 56.2 | N,N-dimethyl acrylamide | 43.2 | Tristyryl phenol-polyethylene glycol (100)-methacrylate | 0.6 | - | - | - | - | 400,000 |
| Polymer 2 | | 52.7 | Acrylamide | 45.5 | | 0.2 | Polyethylene glycol block polypropylene glycol (790)-vinyloxybutyl ether | 1.1 | - | - | 500,00 |
| | | | | | | | Polyethylene glycol block polypropylene glycol (3000)-vinyloxybutyl ether | 0.5 | | | |
| Polymer 3 | | 58.4 | | 27.2 | | 0.3 | Polyethylene glycol block polypropylene glycol (1100)-vinyloxybutyl ether | 1.7 | [3-(acryloylamino)-propyl]dimethylamine | 12.4 | 800,000 |

The components of the admixtures prepared by mixing the aforementioned (meth)acrylic-based viscosity adjusting component with the aforementioned copolymers are shown below in Table 3. In Table 3, the mixture amounts are described as a solid content in the admixture in % by mass. Moreover, in Table 3, SAN X^{®} M mfd. by Nippon Paper Industries Co., Ltd. and Borresperse NA mfd. by Borregaard AS were utilized as the lignin derivative. "GNa" means sodium gluconate, GNa and saccharose were utilized as the retarding agent. All mixtures otherthan those of Table 3 are of water.

**[Table 3]**

| | Lignin derivative | | Hydrolysable copolymer | | (Meth)acrylic-based viscosity adjusting component | | Copolymer having no hydrolysable group | | Retarding agent | |
|---|---|---|---|---|---|---|---|---|---|---|
| | Type | Mixture amount | Type | Mixture amount | Type | Mixture amount | Type | Mixture amount | Type | Mixture amount |
| Admixture 1 | SAN X^{®} M | 11.7 | Copolymer 4 | 1.6 | Polymer 1 | 0.05 | Copolymer 6 | 2.7 | GNa | 3.9 |
| Admixture 2 | Borresperse NA | 9.8 | Copolymer 4 | 1.3 | Polymer 1 | 0.05 | Copolymer 6 | 2.3 | GNa | 6.5 |
| Admixture 3 | Borresperse NA | 10.8 | Copolymer 1 | 5.0 | Polymer 2 | 0.03 | - | - | GNa | 3.4 |
| | | | Copolymer 2 | 2.1 | | | | | | |
| Admixture 4 | SAN X^{®} M | 14.0 | Copolymer 3 | 8.5 | Polymer 1 | 0.03 | - | - | GNa | 4.5 |
| Admixture 5 | SAN X^{®} M | 5.0 | Copolymer 1 | 2.1 | Polymer 3 | 0.10 | - | - | - | - |
| | | | Copolymer 5 | 2.5 | | | | | | |
| Admixture 6 | SAN X^{®} M | 11.7 | Copolymer 3 | 1.6 | Polymer 1 | 0.05 | Copolymer 6 | 2.4 | Saccharose | 3.3 |
| Admixture 7 | - | - | Copolymer 4 | 3.2 | Polymer 1 | 0.03 | Copolymer 7 | 4.5 | GNa | 3.9 |
| Admixture 8 | Borresperse NA | 8.2 | - | | - | | Copolymer 6 | 7.3 | GNa | 2.00 |
| Admixture 9 | SAN X^{®} M | 5.9 | - | | Polymer 1 | 0.05 | Copolymer 6 | 7.3 | GNa | 8.0 |
| Admixture 10 | SAN X^{®} M | 4.7 | Copolymer 3 | 8.8 | - | | Copolymer 6 | 5.3 | GNa | 1.6 |

A compatibility test for admixture compatibility was carried out by the below procedures.

As shown in the aforementioned Table 3, Admixtures 1 to 10 were prepared. These were packed into 100 ml glass vials, and stored at 5°C, 20°C and 40°C. The solutions were visually observed one month later, and were evaluated as follows.
Good: No separation of solution (This is no problem.)
Bad: Separation of solution (This is a problem.)

The concrete test was carried out in accordance with below procedures. The preparation of the concrete for testing was carried out under the mixture conditions shown in the following Table 5, using the materials of the following Table 4. "W/C" in Table 5 means the water-cement ratio, and "s/a" means the volume ratio of fine aggregate to total aggregate.

### (Kneading method)

Kneading was carried out with a forced action dual axis mixer for actual machine test. For the charging of materials, water and fine aggregate including the admixture prepared as above were charged at the same time and then the cement, and finally the coarse aggregate were charged and kneaded for 45 seconds. After kneading, this was loaded onto a truck agitator, stirred at high-speed for 10 seconds and then taken as the test sample.

The test items are as follows. Moreover, the below tests were all conducted in an environmental temperature of 20°C.

### Test Items

### (1) Slump test

The slump was measured in accordance with JIS A 1101 immediately after kneading, 60 minutes after kneading and 120 minutes after kneading. The degradation amount of slump compared to that immediately after kneading was evaluated in accordance with the below evaluation criteria. These evaluation results were regarded as the 'flow retainability'.
Excellent: Degradation amount of slump value was 1.5 cm or less
Good: Degradation amount of slump value was more than 1.5 cm and 3.0 cm or less
Bad: Degradation amount of slump value was more than 3.0 cm.

### (2) Setting time

The setting time was measured in accordance with JIS A 1147. The difference between starting time and ending time was evaluated in accordance with the below evaluation criteria.
Excellent: The difference between the starting time and ending time was 120 minutes or less
Good: The difference between the starting time and ending time was more than 120 minutes and 180 minutes or less
Bad: The difference between the starting time and ending time was more than 180 minutes

### (3) Bleeding test

The amount of bleeding was measured in accordance with JIS A 1123 and was evaluated in accordance with the below evaluation criteria.
Good: Amount of bleeding was less than 0.2 cm³/cm²
Bad: Amount of bleeding was 0.2 cm³/cm² or more

### (4) Integrity of concrete

The integrity of concrete was visually evaluated, in accordance with the below evaluation criteria.
Good: Aggregate and paste did not separate (having integrity)
Bad : Aggregate and paste appeared to separate (having no integrity)

The materials used in the concrete test are shown below in Table 4, and the mixtures thereof are shown below in Table 5.

**[Table 4]**

| Material | Symbol | Summary |
|---|---|---|
| Water | W | Tap water |
| Cement | NC | Ordinary portland cement mfd. by Nippon Steel & Sumitomo Metal (density 3.15 g/cm³) |
| | BA | Blast furnace cement type A, mfd. by Nippon Steel & Sumitomo Metal Blast Furnace Slag Cement Co., Ltd. (density 3.10 g/cm³) |
| | BB | Blast furnace cement type B, mfd. by Nippon Steel & Sumitomo Metal Blast Furnace Slag Cement Co., Ltd. (density 3.02 g/cm³) |
| | BC | Blast furnace cement type C, mfd. by Nippon Steel & Sumitomo Metal Blast Furnace Slag Cement Co., Ltd. (density 2.97 g/cm³) |
| Fine aggregate | S1 | Marine sand (density in saturated and surface-dry condition 2.56 g/cm³) |
| | S2 | Mountain sand (density in saturated and surface-dry condition 2.55 g/cm³) |
| Coarse aggregate | G1 | Crushed stone 2013 (density in saturated and surface-dry condition 2.65 g/cm³) |
| | G2 | Crushed stone 1505 (density in saturated and surface-dry condition 3.02 g/cm³) |

**[Table 5]**

| Type of mixture | Target slump (cm) | Target amount of air (%) | W/C(%) | s/a | Unit amount (kg/m³) | | | | | | | | |
|---|---|---|---|---|---|---|---|---|---|---|---|---|---|
| | | | | (%) | W | NC | BA | BB | BC | S1 | S2 | G1 | G2 |
| Mixture 1 | 12.0 | 4.5 | 55.2 | 46 | 170 | 308 | - | - | - | 648 | 161 | 443 | 616 |
| Mixture 2 | 12.0 | 4.5 | 55.2 | 46 | 170 | - | 308 | - | - | 648 | 161 | 443 | 613 |
| Mixture 3 | 12.0 | 4.5 | 55.2 | 46 | 170 | - | - | 308 | - | 643 | 161 | 440 | 613 |
| Mixture 4 | 12.0 | 4.5 | 55.2 | 46 | 170 | - | - | - | 308 | 640 | 161 | 440 | 610 |

Test results are shown below in Tables 6 and 7.

**[Table 6]**

| No. | Mixture | Admixture | | Slump (cm) | | | Slump degradation amount at 120 minutes (cm) | Setting time (h-min) | | Difference in start and end (minutes) | Amount of bleeding (cm³/cm² ) | Is there integrity of concrete ? | Compatibility |
|---|---|---|---|---|---|---|---|---|---|---|---|---|---|
| | | Type | Amount used (C x %) | 0 minutes | 60 minutes | 120 minutes | | Start | End | | | | |
| Example 1 | Mixture 1 | Admixture 1 | 1.20 | 12.5 | 12.5 | 10.5 | 2.0 | 8-30 | 10-30 | 120 | 0.15 | Yes | No problem |
| Example 2 | Mixture 1 | Admixture 2 | 1.20 | 12.5 | 12.5 | 11.5 | 1.0 | 9-00 | 11-00 | 120 | 0.17 | Yes | No problem |
| Example 3 | Mixture 1 | Admixture 3 | 1.20 | 12.5 | 11.5 | 10.0 | 2.5 | 8-20 | 10-15 | 115 | 0.14 | Yes | No problem |
| Example 4 | Mixture 3 | Admixture 1 | 1.00 | 12.5 | 12.5 | 10.5 | 2.0 | 8-30 | 11-00 | 150 | 0.17 | Yes | No problem |
| Example 5 | Mixture 3 | Admixture 2 | 1.00 | 12.5 | 12.5 | 11.0 | 1.5 | 9-00 | 11-30 | 150 | 0.19 | Yes | No problem |
| Example 6 | Mixture 3 | Admixture 3 | 1.00 | 12.5 | 11.0 | 9.5 | 3.0 | 8-20 | 10-45 | 135 | 0.16 | Yes | No problem |
| Example 7 | Mixture 3 | Admixture 4 | 1.00 | 12.5 | 11.5 | 10.0 | 2.5 | 8-25 | 10-55 | 150 | 0.17 | Yes | No problem |
| Example 8 | Mixture 3 | Admixture 5 | 1.00 | 12.5 | 11.0 | 9.5 | 3.0 | 8-10 | 10-25 | 135 | 0.15 | Yes | No problem |
| Example 9 | Mixture 3 | Admixture 6 | 1.00 | 12.5 | 12.5 | 10.5 | 2.0 | 8-55 | 11-25 | 150 | 0.19 | Yes | No problem |
| Example 10 | Mixture 2 | Admixture 1 | 1.10 | 12.5 | 12.5 | 10.5 | 2.0 | 8-20 | 10-45 | 145 | 0.16 | Yes | No problem |
| Example 11 | Mixture 4 | Admixture 1 | 0.90 | 12.5 | 11.5 | 9.5 | 3.0 | 8-35 | 11-20 | 165 | 0.18 | Yes | No problem |
| Comparative Example 1 | Mixture 1 | Admixture 7 | 1.20 | 12.5 | 11.0 | 9.0 | 3.5 | 7-00 | 9-00 | 120 | 0.12 | No | No problem |
| Comparative Example 2 | Mixture 3 | Admixture 8 | 1.00 | 12.5 | 9.5 | 6.0 | 6.5 | 7-00 | 9-30 | 150 | 0.13 | No | No problem |
| Comparative Example 3 | Mixture 3 | Admixture 9 | 1.00 | 12.5 | 9.5 | 8.0 | 4.5 | 7-20 | 10-10 | 170 | 0.15 | Yes | No problem |
| Comparative Example 4 | Mixture 3 | Admixture 10 | 1.00 | 12.5 | 9.5 | 7.5 | 5.0 | 7-00 | 9-45 | 165 | 0.14 | No | No problem |

**Table 7**

| No. | Mixture | Admixture | | Flow retainability | | Setting | Amount of bleeding | Integrity of concrete | Compatibility |
|---|---|---|---|---|---|---|---|---|---|
| | | Type | Amount used (C x %) | 60 minutes | 120 minutes | | | | |
| Example 1 | Mixture 1 | Admixture 1 | 1.20 | Excellent | Good | Excellent | Good | Good | Good |
| Example 2 | Mixture 1 | Admixture 2 | 1.20 | Excellent | Excellent | Excellent | Good | Good | Good |
| Example 3 | Mixture 1 | Admixture 3 | 1.20 | Excellent | Good | Excellent | Good | Good | Good |
| Example 4 | Mixture 3 | Admixture 1 | 1.00 | Excellent | Good | Good | Good | Good | Good |
| Example 5 | Mixture 3 | Admixture 2 | 1.00 | Excellent | Excellent | Good | Good | Good | Good |
| Example 6 | Mixture 3 | Admixture 3 | 1.00 | Excellent | Good | Good | Good | Good | Good |
| Example 7 | Mixture 3 | Admixture 4 | 1.00 | Excellent | Good | Good | Good | Good | Good |
| Example 8 | Mixture 3 | Admixture 5 | 1.00 | Excellent | Good | Good | Good | Good | Good |
| Example 9 | Mixture 3 | Admixture 6 | 1.00 | Excellent | Good | Good | Good | Good | Good |
| Example 10 | Mixture 2 | Admixture 1 | 1.10 | Excellent | Good | Good | Good | Good | Good |
| Example 11 | Mixture 4 | Admixture 1 | 0.90 | Excellent | Good | Good | Good | Good | Good |
| Comparative Example 1 | Mixture 1 | Admixture 7 | 1.20 | Excellent | Bad | Excellent | Good | Bad | Good |
| Comparative Example 2 | Mixture 3 | Admixture 8 | 1.00 | Good | Bad | Good | Good | Bad | Good |
| Comparative Example 3 | Mixture 3 | Admixture 9 | 1.00 | Good | Bad | Good | Good | Good | Good |
| Comparative Example 4 | Mixture 3 | Admixture 10 | 1.00 | Good | Bad | Good | Good | Bad | Good |

Accordingly, for the slump test in a lean mix with a 55.2% water-cement ratio, Examples 1 to 11 which utilized admixtures of which the lignin derivative (A), copolymer having a hydrolysable group (B) and (meth)acrylic-based viscosity adjusting component (C) were mixed in, flow retainability was excellent even after 120 minutes, and integrity of concrete was obtained. Moreover, in Examples 1 to 11, workable time and constructability are obtainable due to obtaining a suitable setting time, and the amount of bleeding was also suppressible. Moreover, good compatibility was obtained in Examples 1 to 11.

The flow retainability was particularly excellent in Example 2 and 5, in which Admixture 2, which has a mixture amount of 1.3% by mass of the copolymer having a hydrolysable group (B), was mixed in.

Moreover, flow retainability was excellent even when utilizing a copolymer having a hydrolysable group of which the molar ratio of the ethylenically unsaturated monomer having hydrolysability (b1), based on the ethylenically unsaturated monomer having a polyalkyleneoxide ether chain (b2), were variously changed. Of these, compared to the other examples which utilized admixtures of which the molar ratio of the ethylenically unsaturated monomer having hydrolysability (b1), based on the ethylenically unsaturated monomer having a polyalkyleneoxide ether chain (b2), are 0.32 to 1.60, and 4.10, the flow retainability was further improved particularly in Examples 2 and 5, in which Admixture 2, whose molar ratio of the ethylenically unsaturated monomer (b1) having hydrolysability (b1), based on the ethylenically unsaturated monomer having a polyalkyleneoxide ether chain (b2), is 3.20, was mixed in.

Meanwhile, flow retainability was not obtained in Comparative Examples 1 to 4, which were mixed with an admixture of which any of a lignin derivative (A), a copolymer having a hydrolysable group (B) or a (meth)acrylic-based viscosity adjusting component (C) were not mixed in.

## Claims

1. An admixture for concrete, comprising a lignin derivative (A), a copolymer having a hydrolysable group (B) and a (meth)acrylic-based viscosity adjusting component (C), wherein the copolymer having a hydrolysable group (B) is a copolymer of at least two monomers consisting of an ethylenically unsaturated monomer having hydrolysability (b1) and an ethylenically unsaturated monomer having a polyalkyleneoxide ether chain (b2).

2. The admixture for concrete according to Claim 1, further comprising a hydroxycarboxylic acid and/or saccharide (D).

3. The admixture for concrete according to Claim 1 or 2, wherein the molar ratio of the ethylenically unsaturated monomer having hydrolysability (b1) is 0.50 or more and 10 or less, based on the ethylenically unsaturated monomer having a polyalkyleneoxide ether chain (b2).

4. The admixture for concrete according to Claims 1 or 2, wherein the molar ratio of the ethylenically unsaturated monomer having hydrolysability (b1) is 1.1 or more and 5.0 or less, based on the ethylenically unsaturated monomer having a polyalkyleneoxide ether chain (b2).

5. The admixture for concrete according to any one of Claims 1 to 4, wherein the ethylenically unsaturated monomer having hydrolysability (b1) is a compound represented by the following general formula (1): 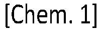 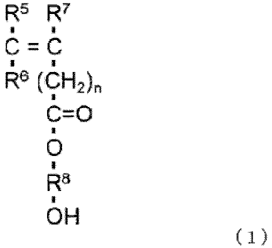 (wherein R⁵, R⁶, R⁷ each independently represents hydrogen or a methyl group; R⁸ represents an alkylene group of carbon number 2 to 20; and n represents an integer of 0 to 2.).

6. The admixture for concrete according to any one of Claims 1 to 5, wherein the ethylenically unsaturated monomer having a polyalkyleneoxide ether chain (b2) is a compound represented by the following general formula (2): 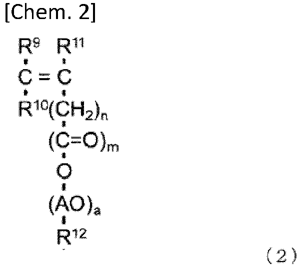 (wherein R⁹, R¹⁰, R¹¹ each independently represents hydrogen or a methyl group; R¹² represents hydrogen, a methyl group or an aliphatic hydrocarbon group of carbon number 2 to 20; AO represents an alkyleneoxide group of carbon number 2 to 4; a represents an integer of 1 to 350; m represents an integer of 0 or 1; and n represents an integer of 0 to 2.).

7. The admixture for concrete according to any one of Claims 1 to 6, wherein the (meth)acrylic-based viscosity adjusting component (C) is a polymer comprising, as a constituent unit, a monomer which is a sulfo-group-containing (meth)acrylic acid derivative.

8. The admixture for concrete according to any one of Claims 1 to 7, wherein the number average molecular weight of the (meth)acrylic-based viscosity adjusting component (C) is in the range of 50,000 g/mol or more and 20,000,000 g/mol or less.

9. The admixture for concrete according to Claim 7, wherein the polymer comprising, as a constituent unit, a monomer which is a sulfo-group-containing (meth)acrylic acid derivative, is a compound having a constituent unit represented by the following general formula (3): 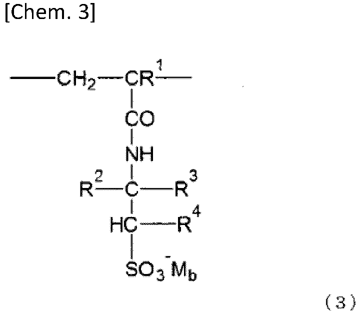 (wherein R¹ represents hydrogen or a methyl group; R², R³, R⁴ each independently represents hydrogen, an aliphatic hydrocarbon group of carbon number 1 to 6, or a phenyl group which may be substituted with a methyl group; M represents hydrogen, sodium, potassium, calcium, magnesium, ammonium, or ammonium substituted with an organic group; and b represents 1/2 or 1.).

10. The admixture for concrete according to any one of Claims 1 to 9, wherein 0.50% by mass or more and 20.0% by mass or less of the lignin derivative (A) is contained in the admixture for concrete.

11. The admixture for concrete according to any one of Claims 1 to 10, wherein 0.50% by mass or more and 30.0% by mass or less of the copolymer having a hydrolysable group (B) is contained in the admixture for concrete.

12. The admixture for concrete according to any one of Claims 1 to 11, wherein 0.001% by mass or more and 0.150% by mass or less of the (meth)acrylic-based viscosity adjusting component (C) is contained in the admixture for concrete.

13. The admixture for concrete according to any one of Claims 1 to 12, wherein 0.10% by mass or more and 20.0% by mass or less of the hydroxycarboxylic acid and/or saccharide (D) is contained in the admixture for concrete.

14. A concrete, containing the admixture for concrete according to any one of Claims 1 to 12, wherein a water-cement ratio, which indicates the ratio of a mass of water to a mass of cement, is 45% or more.

15. A concrete, containing the admixture for concrete according to any one of Claims 1 to 12, and containing more than 30% by mass of blast furnace slag.

16. A use of admixture for concrete according to any one of Claims 1 to 12, wherein the admixture is added to concrete with a water-cement ratio, which indicates the ratio of a mass of water to a mass of cement, of 45% or more.

17. A use of admixture for concrete according to any one of Claims 1 to 12, wherein the admixture is added to a concrete containing more than 30% by mass of blast furnace slag.
